(19) Europäisches Patentamt
European Patent Office
Office européen des brevets

(11) Publication number: **0 441 284 A2**

# (12) EUROPEAN PATENT APPLICATION

(21) Application number: **91101442.1**

(51) Int. Cl.5: **C08G 59/14**

(22) Date of filing: **02.02.91**

(30) Priority: **08.02.90 US 478295**

(43) Date of publication of application:
**14.08.91 Bulletin 91/33**

(84) Designated Contracting States:
**AT BE CH DE ES FR GB IT LI NL SE**

(71) Applicant: **THE DOW CHEMICAL COMPANY**
**2030 Dow Center Abbott Road P.O. Box 1967**
**Midland Michigan 48640-1967(US)**

(72) Inventor: **Wang, Chun S.**
**No 2 Lane 365, Hsi-Men Road**
**Section 2, Tainan(TW)**
Inventor: **Bowden, Robert L.**
**534 Wisteria**
**Lake Jackson, Texas 77566(US)**
Inventor: **Wessels, Mark K.**
**62 Caladium Court**
**Lake Jackson, Texas 77566(US)**

(74) Representative: **Sternagel, Hans-Günther, Dr. et al**
**Patentanwalte Dr. Michael Hann, Dr. H.-G. Sternagel, Dr. H. Dorries Sander Aue 30**
**W-5060 Bergisch Gladbach 2(DE)**

## (54) Process for reducing the undesirable halide content of epoxyresins.

(57) The total aliphatic halide content of epoxy resins is reduced by heating a resin containing hydrolyzable halide or bound halide or both hydrolyzable and bound halide dissolved in a solvent system containing at least one polar aprotic organic solvent which is not a ketone and at least one compound containing at least one aliphatic hydroxyl group per molecule in the presence of a suitable basic-acting compound for a time sufficient to reduce the total undesirable halide content.

EP 0 441 284 A2

## PROCESS FOR REDUCING THE UNDESIRABLE HALIDE CONTENT OF EPOXY RESINS

The present invention pertains to a process for reducing the total undesirable halide content of an epoxy resin containing hydrolyzable halide, bound halide or both hydrolyzable halide and bound halide.

Epoxy resins are used in the electronics industry as encapsulants, potting compounds, electrical laminates and the like. This industry has discovered that the halide content of the epoxy resin adversely affects the electrical properties of the resultant end products. The higher the halide content, the greater the detriment.

Wang et al. in U. S. Patent 4,585,838 discloses a method for reducing the total halide content by heating an epoxy resin containing hydrolyzable and bound halide by dissolving said epoxy resin in a solvent system comprising from 25 to 75 percent by weight of a ketone and from 75 to 25 percent by weight of an aromatic hydrocarbon in the presence of (A) from 0.1 to 5 percent by weight based upon the weight of said epoxy resin of at least one cosolvent having at least one aliphatic hydroxide per molecule; and (B) from 0.25 to 10 moles of an alkali metal hydroxide per equivalent of total halide at a temperature and for a time sufficient to reduce the total halide content of said epoxy resin and thereafter recovering the resultant epoxy resin.

There is a need for reducing the total (hydrolyzable and bound) halide content of epoxy resins even further than is obtained by the method of Wang et al.

The present invention pertains to a a process for reducing the aliphatic halide content of an epoxy resin containing hydrolyzable halide or bound halide or both hydrolyzable and bound halide which process comprises (A) heating said epoxy resin which has been dissolved in a solvent system in the presence of a basic-acting compound at a temperature and for a time sufficient to reduce the total aliphatic halide content of said epoxy resin; and (B) thereafter recovering the resultant epoxy resin; characterized by employing, as the solvent system, a combination of solvents comprising (1) at least one polar aprotic organic solvent which is not a ketone and (2) at least one organic solvent containing at least one aliphatic hydroxyl group per molecule and wherein said solvent system comprises from 90 to 99.5 percent by weight of component (1) based upon the combined weight of components (1) and (2) and from 10 to 0.5 percent by weight of component (2) based upon the combined weight of components (1) and (2).

Another aspect of the present invention is a process for reducing the aliphatic halide content of an epoxy resin containing hydrolyzable, halide bound halide or both which process is characterized by

(A) dissolving said epoxy resin in a solvent system which comprises

(1) from 90 to 99.5 percent by weight of at least one polar aprotic organic solvent which is not a ketone;

(2) from 10 to 0.5 percent by weight of an organic solvent having at least one aliphatic hydroxyl group per molecule;

(B) heating the resultant solution to a temperature of from 40 °C up to 150 °C;

(C) adding from 0.25 to 10, moles of a basic-acting compound per equivalent of total aliphatic halide;

(D) continuing the heating for a time sufficient to reduce the total aliphatic halide content of said epoxy resin;

(E) washing the product from step (D) at least once with either water, a dilute aqueous solution of a weak inorganic acid, acid salt or a combination thereof; and

(F) recovering the resultant epoxy resin having a reduced total aliphatic halide content from the product of step (E).

The present invention provides a method for reducing the total aliphatic (hydrolyzable and bound) halide content of epoxy resins.

## DETAILED DESCRIPTION OF THE INVENTION

Hydrolyzable halide is defined herein as any combination of halogen and hydroxyl groups on adjacent aliphatic carbon atoms, such as that illustrated by the following structure with chlorine being illustrated as the halogen.

Bound halide is defined herein as any aliphatic halides not adjacent to a hydroxyl group, such as that

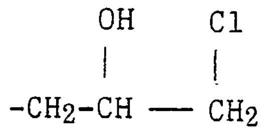

illustrated by the following structures with chlorine being illustrated as the halogen.

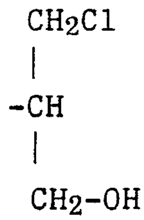

or

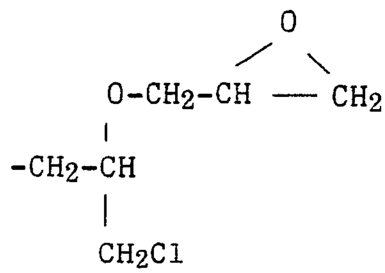

Total halide is defined herein as hydrolyzable halide plus bound halide.

Suitable epoxy resins which can be employed herein include any epoxy resin containing an average of more than one vicinal epoxy group per molecule and which contains an undesirable quantity of total halide, hydrolyzable halide, bound halide or mixture thereof.

Such epoxy resins include, for example, the glycidyl derivatives of compounds containing an average of more than one active hydrogen atom per molecule, particularly such active hydrogen atoms attached to an oxygen, sulfur or nitrogen atom.

By the term active hydrogen atom, it is meant that the compound will react with a vicinal epoxy group.

Particularly suitable epoxy resins include the polyglycidyl ethers of compounds having an average of more than one aromatic hydroxyl group per molecule and which contains at least 10 parts per million total halide such as, for example, glycidyl ethers of bisphenols, glycidyl ethers of phenol-formaldehyde resins, glycidyl ethers of cresol-formaldehyde resins, glycidyl ethers of hydrocarbon-phenol resins, glycidyl ethers of hydrocarbon-cresol resins, mixtures thereof and the like. These and other glycidyl ethers of aromatic hydroxyl containing compounds are disclosed by Wang et al. in U.S. Patent 4,499,255, which is incorporated herein by reference. The preferred epoxy resins are the glycidyl ethers of bisphenol A, bisphenol F, bisphenol S, bisphenol AP (1,1-bis(2-hydroxyphenyl)-1-phenylethane), phenol-formaldehyde novolac resins, cresol-formaldehyde novolac resins, dicyclopentadiene-phenol resins, dicyclopentadiene-cresol resins, combinations thereof.

The amount of solvent system, i.e., the total amount of solvent employed herein is that which provides from 25 to 500, suitably from 50 to 250, and more suitably from 100 to 200, percent by weight of total solvent based upon the weight of the epoxy resin being treated.

The solvent system employed herein contains (1) at least one polar aprotic solvent which is not a ketone and (2) at least one organic solvent containing at least one aliphatic hydroxyl group per molecule. Usually, the solvent system employed herein contains from 90 to 99.5, preferably from 92 to 98, more preferably from 95 to 98, percent by weight of polar aprotic solvent based upon the combined weight of polar aprotic solvent, component (1), and organic solvent containing at least one aliphatic hydroxyl group per molecule, component (2); and from 10 to 0.5, preferably from 8 to 2, more preferably from 5 to 2, percent by weight of organic solvent containing at least one aliphatic hydroxyl group per molecule, component (2) based upon the combined weight of polar aprotic solvent, component (1), and organic solvent containing at least one aliphatic hydroxyl group per molecule, component (2).

Suitable polar aprotic solvents, component (1), which can be employed herein include, for example, any such solvent which is not a ketone such as dimethyl sulfoxide, dimethyl acetamide, N-methylpyrrolidinone, dimethyl formamide, dimethylsulfone, tetramethyl urea, hexamethyl phosphoramide, tetramethylenesulfone, 1,4-dioxane, 1,2-dimethoxy ethane, 1,2-diethoxy ethane, 1,2-dimethoxy propane, and combinations thereof. Any such solvent can be employed so long as it does not react with the components of the reaction mixture and is not a ketone.

Suitable organic solvents containing at least one aliphatic hydroxyl group per molecule include, for example, aliphatic alcohols, aliphatic diols or aliphatic triols, polyoxyalkylene polyols, alkyl ether compounds, any combination thereof. Particularly suitable are those organic aliphatic hydroxyl group-containing

solvents which have from about 1 to about 3 aliphatic hydroxyl groups per molecule. Suitable such solvents include, for example, those having from about 1 to about 50, preferably from about 1 to about 25, more preferably from about 1 to about 10 carbon atoms per molecule. Particularly suitable such solvents include, for example, cyclic and acyclic aliphatic alcohols such as, for example, methanol, ethanol, propanol, butanol, pentanol, hexanol, cyclohexanol and the like; alkylene polyols such as, for example, ethylene glycol propylene glycol, butylene glycol, glycerine, trimethylol propane; alkyl and phenyl ethers of glycols such as, for example, butylene glycol methyl ether, diethylene glycol n-butyl ether, diethylene glycol methyl ether, dipropylene glycol methyl ether, ethylene glycol n-butyl ether, ethylene glycol ethyl ether, ethylene glycol methyl ether, ethylene glycol phenyl ether, propylene glycol methyl ether, propylene glycol ethyl ether, tripropylene glycol methyl ether, tripropylene glycol ethyl ether, tripropylene glycol n-butyl ether, or any combination thereof.

Also suitable are the reaction products of water, ethylene glycol, propylene glycol, butylene glycol, or any combination thereof and the like with an alkylene oxide such as ethylene oxide, propylene oxide, butylene oxide, or any combination thereof.

Suitable basic-acting compounds include, the alkali metal basic-acting compounds include the alkali metal hydroxides, carbonates, bicarbonates, phosphates or any combination thereof. Particularly suitable basic-acting compounds include, for example, sodium hydroxide, potassium hydroxide, lithium hydroxide, sodium carbonate, potassium carbonate, lithium carbonate, sodium bicarbonate, potassium bicarbonate, lithium bicarbonate, sodium phosphate, potassium phosphate, sodium hydrogen phosphate, potassium hydrogen phosphate and combinations thereof. The basic-acting compound can be employed in solid form or as an aqueous solution, preferably as an aqueous solution in a concentration of from 10 to 70, suitably from 25 to 65, more suitably from 40 to 60, most suitably from 45 to 55 percent alkali metal hydroxide by weight. The amount of alkali metal hydroxide employed is from 0.25 to 10, suitably from 0.5 to 4, more suitably from 0.65 to 3, most suitably from 0.8 to 2 equivalents of basic-acting compound per equivalent of undesirable aliphatic halide contained in the epoxy resin. Suitable, but less preferred, are the hydroxides, carbonates, bicarbonates, phosphates or any combination thereof of an alkaline earth metal such as, for example, barium, calcium, magnesium.

The heating can be conducted at atmospheric or superatmospheric pressure. When relatively low boiling solvents are employed, superatmospheric pressure is usually required. It is preferred to employ a temperature of from 40°C up to 150°C, preferably from 60°C to 140°C, more preferably from 80° to 130°C. It is preferable to not employ a temperature above the boiling point of the solvent system at the pressure employed. For low boiling solvent systems, pressure can be employed so that temperatures above the atmospheric boiling point of the solvent system can be employed.

When washing the epoxy resin to remove the salt formed and any unreacted alkali metal hydroxide, it is preferred to employ a plurality of washing steps employing as the first wash a dilute solution of an inorganic acid or a dilute solution of an inorganic acid salt, preferably acids or acid salts having a pKa value of from 2 to 10, preferably from 2 to 7.

Suitable acids and acid salts include, for example, phosphoric acid, mono-sodium phosphate, di-sodium phosphate, carbonic acid, boric acid and mixtures thereof.

The epoxy resin is ultimately recovered by any suitable means, such as by subjecting the organic phase from the washing procedure to distillation to remove the solvents from the epoxy resin.

The following examples are illustrative of the present invention, but are not to be construed as to limiting the scope thereof in any manner.

EXAMPLES 1-5 AND COMPARATIVE EXPERIMENTS A-K

Eighty (80) grams of a cresol-formaldehyde epoxy novolac resin having an average epoxide equivalent weight (EEW) of 193 containing 124 ppm hydrolyzable chloride and 777 ppm bound chloride (901 ppm total chloride) is dissolved in various solvents (Table 1 and 2) and heated to 60°C. Varying amounts of 45% aqueous potassium hydroxide is added all at once and the reaction mixture is maintained at 60°C for one hour with good agitation.

The reaction mixture is diluted to 20% resin concentration with methyl ethyl ketone (MEK))/toluene solvent mix, neutralized with $CO_2$ and then washed with water three to four times to remove KCl.

The organic phase from the water washes is placed on a rotary evaporator under a full vacuum and 170°C to remove the solvent completely. A purified cresol-formaldehyde epoxy novolac resin is obtained with analytical results provided in Table 1.

TABLE 1

| | Ex. 1 | Ex. 2 | Ex. 3 | C.E. A* | C.E. B* |
|---|---|---|---|---|---|
| CEN[1] | 80 | 80 | 80 | 80 | 80 |
| 45% KOH,g | 0.232 | 0.232 | 0.232 | 0.232 | 0.232 |
| Eq./Eq. Cl | 0.915 | 0.915 | 0.915 | 0.915 | 0.915 |
| DMSO[2],g | 120 | 120 | 120 | 0 | 0 |
| PM[3],g | 4 | 0 | 0 | 0 | 0 |
| IPA[4],g | 0 | 4 | 0 | 0 | 0 |
| E-400[5],g | 0 | 0 | 4 | 0 | 4 |
| MEK/Tol[6],g | 0 | 0 | 0 | 80 | 80 |
| <u>Bound Cl</u> | | | | | |
| Initial,ppm | 777 | 777 | 777 | 777 | 777 |
| Final, ppm | 564 | 537 | 629 | 755 | 729 |
| <u>Hydroly. Cl</u> | | | | | |
| Initial,ppm | 124 | 124 | 124 | 124 | 124 |
| Final, ppm | <1 | 3 | <1 | <1 | <1 |
| <u>Total Cl</u> | | | | | |
| Initial,ppm | 901 | 901 | 901 | 901 | 901 |
| Final, ppm | 564 | 540 | 629 | 755 | 729 |

* Not an example of the present invention.
1 Cresol epoxy novolac resin having an EEW of 195 and an average functionality of 6.
2 Dimethylsulfoxide.
3 DOWANOL™PM, 1-methoxy-2-hydroxypropane
4 Isopropyl alcohol.
5 Polyethylene glycol having a weight average molecular weight of 400.
6 50% Methyl ethyl ketone and 50% toluene by weight.

TABLE 1 (continued)

| | C.E. C* | C.E. D* | C.E. E* | C.E. F* | C.E. G* |
|---|---|---|---|---|---|
| CEN[1] | 80 | 80 | 80 | 80 | 80 |
| 45% KoH,g | 0.232 | 0.232 | 0.232 | 0.232 | 0.232 |
| Eq./Eq. Cl | 0.915 | 0.915 | 0.915 | 0.915 | 0.915 |
| DMSO[2],g | 6 | 11 | 11 | 24 | 120 |
| PM[3],g | 0 | 0 | 4 | 4 | 0 |
| IPA[4],g | 0 | 0 | 0 | 0 | 0 |
| E-400[5],g | 0 | 0 | 0 | 0 | 0 |
| MEK/Tol[6],g | 120 | 110 | 110 | 96 | 0 |
| Bound Cl | | | | | |
| Initial,ppm | 777 | 777 | 777 | 777 | 777 |
| Final, ppm | 734 | 674 | 696 | 689 | 636 |
| Hydroly. Cl | | | | | |
| Initial,ppm | 124 | 124 | 124 | 124 | 124 |
| Final, ppm | <1 | <1 | 2 | <1 | 2 |
| Total Cl | | | | | |
| Initial,ppm | 901 | 901 | 901 | 901 | 901 |
| Final, ppm | 734 | 674 | 698 | 689 | 638 |

* Not an example of the present invention.
1 Cresol-formaldehyde epoxy novolac resin having an epoxide equivalent weight of 195 and average functionality of 6.
2 Dimethylsulfoxide.
3 Dowanol PM, 1-methoxy-2-hydroxypropane
4 Isopropyl alcohol.
5 polyethylene glycol with a weight average molecular weight of 400.
6 50% methyl ethyl ketone and 50% toluene by weight.

## Claims

1. A process for reducing the undesirable aliphatic halide content of an epoxy resin containing hydrolyzable halide or bound halide or both hydrolyzable and bound halide which process comprises (A) heating said epoxy resin which has been dissolved in a solvent system in the presence of a basic-acting compound at a temperature and for a time sufficient to reduce the total aliphatic halide content of said epoxy resin; and (B) thereafter recovering the resultant epoxy resin; characterized by employing, as the solvent system, a combination of solvents comprising (1) at least one polar aprotic organic solvent which is not a ketone and (2) at least one organic solvent containing at least one aliphatic hydroxyl group per molecule and wherein said solvent system comprises from 90 to 99.5 percent by weight of

component (1) based upon the combined weight of components (1) and (2) and from 10 to 0.5 percent by weight of component (1) based upon the combined weight of components (1) and (2).

2. A process of Claim 1 wherein said epoxy resin is a glycidyl derivative of a compound containing an average of more than one active hydrogen atom per molecule.

3. A process of Claim 2 wherein
(a) said epoxy resin is a glycidyl derivative of a compound containing an average of more than one active hydrogen atom per molecule wherein said active hydrogen atom is attached to an oxygen atom which is attached to a carbon atom in an aromatic ring; and
(b) said organic solvent containing at least one aliphatic hydroxyl group per molecule is an organic aliphatic compound containing from 1 to 3 aliphatic hydroxyl groups per molecule and from 1 to 25 carbon atoms.

4. A process of Claim 1, 2 or 3 wherein
(a) said epoxy resin is a glycidyl ether of biphenol, bromine or methyl substituted biphenol, bisphenol A, bromine or methyl substituted bisphenol A, bisphenol F, bromine or methyl substituted bisphenol F, bisphenol AP, bromine or methyl substituted bisphenol AP, bisphenol S, bromine or methyl substituted bisphenol S, phenol-formaldehyde novolac resin, bromine or methyl substituted phenol-formaldehyde novolac resin, dicyclopentadiene-phenol resin, dicyclopentadiene-bromine or methyl substituted phenol resin or any combination thereof;
(b) said polar aprotic solvent is dimethyl sulfoxide, dimethyl acetamide, N-methylpyrrolidinone, dimethyl formamide, dimethylsulfone, tetramethyl urea, hexamethyl phosphoramide, tetramethylenesulfone, 1,4-dioxane, 1,2-dimethoxy ethane, 1,2-diethoxy ethane, 1,2-dimethoxy propane, or any combination of any two or more such solvents; and
(c) said organic solvent containing at least one aliphatic hydroxyl group per molecule is methanol, ethanol, propanol, butanol, pentanol, ethylene glycol propylene glycol, butylene glycol, glycerine, trimethylol propane, butylene glycol methyl ether, diethylene glycol n-butyl ether, diethylene glycol methyl ether, dipropylene glycol methyl ether, ethylene glycol n-butyl ether, ethylene glycol ethyl ether, ethylene glycol methyl ether, ethylene glycol phenyl ether, propylene glycol methyl ether, propylene glycol ethyl ether, tripropylene glycol methyl ether, tripropylene glycol ethyl ether, tripropylene glycol n-butyl ether, or any combination of any two or more of such solvents.

5. A process for reducing the total aliphatic halide content of an epoxy resin containing hydrolyzable, halide bound halide or both which process characterized by
(A) dissolving said epoxy resin in a solvent system which comprises
(1) from 90 to 99.5 percent by weight of at least one polar aprotic organic solvent which is not a ketone;
(2) from 10 to 0.5 percent by weight of an organic solvent having at least one aliphatic hydroxyl group per molecule;
(B) heating the resultant solution to a temperature of from 40° C up to 150° C;
(C) adding from 0.25 to 10, moles of a basic-acting compound per equivalent of total aliphatic halide;
(D) continuing the heating for a time sufficient to reduce the total aliphatic halide content of said epoxy resin;
(E) washing the product from step (D) at least once with either water, a dilute aqueous solution of a weak inorganic acid, acid salt or a combination thereof; and
(F) recovering the resultant epoxy resin having a reduced total aliphatic halide content from the product of step (E).

6. A process of Claim 5 wherein
(a) said epoxy resin is a glycidyl derivative of a compound containing an average of more than one active hydrogen atom per molecule wherein said active hydrogen atom is attached to an oxygen atom, nitrogen atom or sulfur atom; and said organic solvent containing at least one aliphatic hydroxyl group per molecule is an organic aliphatic compound containing from 1 to 3 aliphatic hydroxyl groups per molecule and from 1 to 50 carbon atoms; and
(b) said basic-acting compound is a hydroxide, carbonate, bicarbonate or phosphate or any combination thereof of an alkali metal or alkaline earth metal.

7. A process of Claim 6 wherein
(a) said epoxy resin is a glycidyl ether of biphenol, halogen or alkyl substituted biphenol, bisphenol, halogen or alkyl substituted bisphenol, phenol-aldehyde novolac resin, halogen or alkyl substituted phenol-aldehyde novolac resin, unsaturated alkyl hydrocarbon-phenol resin, unsaturated alkyl hydrocarbon-halogen or alkyl substituted phenol resin or any combination thereof;
(b) said organic solvent containing at least one aliphatic hydroxyl group per molecule is an organic aliphatic compound containing from 1 to 3 aliphatic hydroxyl groups per molecule and from 1 to 10 carbon atoms; and
(d) said basic-acting compound is potassium hydroxide, sodium hydroxide, lithium hydroxide or any combination thereof.

8. A process of Claim 7 wherein
(a) said epoxy resin is a glycidyl ether of biphenol, bromine or methyl substituted biphenol, bisphenol A, bromine or methyl substituted bisphenol A, bisphenol F, bromine or methyl substituted bisphenol F, bisphenol AP, bromine or methyl substituted bisphenol AP, bisphenol S, bromine or methyl substituted bisphenol S, phenol-formaldehyde novolac resin, bromine or methyl substituted phenol-formaldehyde novolac resin, dicyclopentadiene-phenol resin, dicyclopentadiene-bromine or methyl substituted phenol resin or any combination thereof;
(b) said polar aprotic solvent is dimethyl sulfoxide, dimethyl acetamide, N-methylpyrrolidinone, dimethyl formamide, dimethylsulfone, tetramethyl urea, hexamethyl phosphoramide, tetramethylenesulfone, 1,4-dioxane, 1,2-dimethoxy ethane, 1,2-diethoxy ethane, 1,2-dimethoxy propane, or any combination of any two or more such solvents;
(c) said organic solvent containing at least one aliphatic hydroxyl group per molecule is methanol, ethanol, propanol, butanol, pentanol, ethylene glycol propylene glycol, butylene glycol, glycerine, trimethylol propane, butylene glycol methyl ether, diethylene glycol n-butyl ether, diethylene glycol methyl ether, dipropylene glycol methyl ether, ethylene glycol n-butyl ether, ethylene glycol ethyl ether, ethylene glycol methyl ether, ethylene glycol phenyl ether, propylene glycol methyl ether, propylene glycol ethyl ether, tripropylene glycol methyl ether, tripropylene glycol ethyl ether, tripropylene glycol n-butyl ether, or any combination of any two or more of such solvents; and
(d) said basic-acting compound is potassium hydroxide, sodium hydroxide or a combination thereof.

9. A process of any of the previous claims wherein
(a) component (1) is employed in an amount of from about 95 to about 98 percent by weight based upon the combined weight of components (1) and (2); and
(b) component (2) is employed in an amount of from about 5 to about 2 percent by weight based upon the combined weight of components (1) and (2).